# EUROPEAN PATENT APPLICATION

(11) **EP 2 269 875 A1**
(43) Date of publication of application: **05.01.2011**
(21) Application number: 10011613.6
(22) Date of filing: 18.04.2006
(51) Int. Cl.: B60R 19/52

(54) **Bull bar arrangement on a motor vehicle front**

(62) Divisional of application: 06252099.4
(71) Applicant: Finney, Ian Antony, Wolverhampton, West Midland WV2 2HX (GB)
(72) Inventor: Finney, Ian Antony, Wolverhampton, West Midland WV2 2HX (GB)
(74) Representative: Skinner, Michael Paul

(57) **Abstract**

By combining an armature (41) which may be formed from a metal or plastics material or cardboard material with a contact assembly generally in the form of foams or other energy absorbing materials it is possible to create a sufficiently robust structure for general installation on a motor vehicle. The armature will deform under impact loads in association with the contact assembly (42,43) in order to provide an acceptable energy absorption profile under impact loads such as a result of collision contact between a pedestrian and the impact protection arrangement secured to a vehicle.

## Description

The present invention relates to impact protection arrangements and more particularly to the impact protection arrangements utilised with regard to motor vehicles to improve safety in respect of impacts with pedestrians and/or other vehicles.

Motor vehicles inherently will on occasion hit other vehicles and pedestrians and therefore vehicle body structures are designed to provide protection both to the occupants of the vehicle and pedestrians. Thus, it is known to provide crumple zones and shaping of vehicle bodies to achieve improved impact protection. It will be understood that among the factors which affect Impact performance are the energy absorbing mechanisms as well as height and angularity of a first contact surface subject to impact.

Vehicle bodies generally comprise a base body form with bumpers and possibly such structures known as nudge bars or bull bars or roo bars. Thus, it is known to provide and align armature structures to provide some impact protection and encased in absorbing material such as foam and generally an outer skin for both aesthetic and functional protection.

Attached figures marked "Prior Art 1 to 4" illustrate parts of a so-called nudge bar arrangement/frontal protection system 1 which is associated with a vehicle body 2. As can be seen, the nudge bar arrangement or system 1 extends forwards of the body 2 and therefore will generally provide the first contact surface in impact. In such circumstances parts of the arrangement or system 1 should be rendered suitable for absorbing energy and provide a sympathetic reaction to impacts, particularly with pedestrians.

The nudge bar arrangement or system 1 comprises a bumper cover 3 which generally extends over an armature 4 shown in Fig. Prior Art 3 as a front perspective view and in Fig. Prior Art 4 as a rear perspective view. The cover 3 generally comprises or includes a foam or other cushioning material having a surface coating to provide aesthetic and other protection for the arrangement or system 1 in use. The armature 4 typically comprises a boxed frame structure formed from a plastics or metal material having channels 5 which support the cover 3 but will deform under impact loads to absorb energy.

The basic impact protection arrangement as depicted in the Figures Prior Art 1 to 4 is not optimised with respect to impact protection.

In accordance with aspects of the present invention there Is provided an Impact protection arrangement for a vehicle, the arrangement comprising an armature frame and a contact assembly, the armature frame arranged to present the contact assembly for energy absorption in association with the armature frame.

Typically, the arrangement incorporates a mounting to secure the arrangement In use. Generally, the mounting comprises a deformable bracket for energy absorption. Possibly, the deformable bracket includes a loop.

Typically, the armature frame is formed from a metal and/or plastics material and/or cardboard material folded to provide energy absorption. Possibly, the armature frame is corrugated.

Advantageously, the armature frame defines a channel away from or towards an impact side, the channel having at least one cut-out to facilitate deflection of the impact side upon impact. Generally, the cut-out may comprise a wedge or key-hole open to an edge of the channel. Alternatively, the cut-out is an aperture in the channel.

Generally, the contact assembly comprises an energy absorbing material and/or cushioning material encasing at least a part of the armature.

Possibly, the mounting incorporates a hinge for utilisation in association with other parts of the mounting to provide energy absorption.

Possibly, the impact protection arrangement is held displaced from a vehicle in use. Alternatively, the impact protection arrangement overlays a portion of a vehicle in use.

Typically, the armature and the contact assembly are combined to be mounted upon an existing bumper of a vehicle.

Alternatively, the armature and/or the contact assembly are secured through an aperture in an existing bumper directly to a vehicle or can be embodied within a combined bumper and guard frontal protection system.

Aspects and embodiments of the present invention will now be described by way of example only with reference to the accompanying drawings in which:
Fig. 1 is a perspective view of an armature column in accordance with a first aspect of the present invention;
Fig. 2 is a perspective view of a column portion of an armature in accordance with aspects of the present invention;
Fig. 3 is a perspective view of an impact protection arrangement in accordance with aspects of the present invention;
Fig. 4 is a side part-cross-sectional view of an impact protection arrangement secured to a vehicle in accordance with aspects of the present Invention;
Fig. 5 is a perspective view of an impact protection arrangement in accordance with aspects of the present invention secured to a vehicle through a hinge mounting on one side and an energy absorbent bracket on the other;
Fig. 6 is a side part-cross-sectional view of a particular impact protection arrangement in accordance with aspects of the present invention secured to one vehicle;
Fig. 7 is a part-cross-sectional view of the impact protection arrangement depicted in Fig. 6 secured to another vehicle;
Fig. 8 is a cross-sectional view of a contact assembly with armature in accordance with aspects of the present invention;
Fig. 9 is a cross-sectional view of a contact assembly with armature in accordance with aspects of the present invention;
Fig. 10 is a cross-sectional view of a contact assembly with armature in accordance with aspects of the present invention;
Fig. 11 is a cross-sectional view of a contact assembly with armature in accordance with aspects of the present invention;
Fig. 12 is a cross-sectional view of a contact assembly with armature in accordance with aspects of the present invention;
Fig. 13 is a cross-sectional view of a contact assembly with armature in accordance with aspects of the present invention;
Fig. 14 is a perspective view of an armature frame formed from corrugated cardboard in accordance with aspects of the present invention;
Fig. 15 is a cross-section of a column of the armature frame depicted in Fig. 14;
Fig. 16 is a top part cross-sectional perspective view of an impact protection arrangement in accordance with aspects of the present invention;
Fig. 17 is a top perspective part cross-sectional view of an impact protection arrangement in accordance with aspects of the present invention;
Fig. 18 is a top perspective part cross-sectional view of an impact protection arrangement in accordance with aspects of the present invention; Fig. 19 is a top perspective part cross-sectional view of an impact protection arrangement in accordance with aspects of the present invention; and,
Fig. 20 is a schematic cross section of a frontal impact protection system secured to a beam in accordance with aspects of the present invention.

Embodiments of the present invention provide an armature which will generally be a relatively stiff structure formed from a metal, moulding, cardboard or injection moulded substrate which may or not be weakened in areas to tune its impact distortion characteristics to match the energy absorption characteristics of a particular vehicle to which it is secured. Generally, the armature is secured through appropriate mountings in the form of slots or holes or bends or folds such that the armature and the mountings present a contact assembly generally in the form of a bumper towards the exterior of the vehicle. This contact assembly may be substantially consistent with the vehicle body contours or held in a stand-off or displaced position away from the vehicle body surface. Particularly with regard to retro-fit impact protection arrangements it is convenient if the arrangement can be secured through mountings using bolts or other mechanisms. As will be described below, such a bolt assembly may be utilised in order to create deformable brackets which themselves can absorb energy and therefore improve the impact protection performance as well as reduce g-force and bending moments upon the bumper assembly in normal use.

The armature and the other mountings as indicated generally provide a relatively stiff framework upon which the contact assembly in the form of a bumper is presented. The contact assembly generally encapsulates an energy absorbing foam or low density grade material to give desired characteristics with respect to head impact requirements and cushioning depth geometry along with profiling through the foam. It will be understood that there is a compromise between armature stiffness in order to maintain an appropriate robust structure about the vehicle and a crushability factor for head impact performance and lower leg impact to bonnet leading edge performance in terms of protection for pedestrians in particular when impacted by a vehicle having an impact protection arrangement in accordance with aspects of the present invention. The energy absorptive insets and layers of aspects of the present invention may be foams, polystyrene or a crushable component formed by an injection moulding or otherwise.

As will be appreciated, typical foams and low density materials utilised for energy absorption in impact protection may be susceptible to easy denting and weathering. In such circumstances, typically the contact assembly will, as indicated, incorporate such energy absorbent materials but encapsulated within an integral skin generally of a plastics material to define the aesthetic appearance of the impact arrangement as a bumper or nudge bar or external surface feature of a vehicle body. Alternatively, the contact assembly may be formed through an injection moulded or polyurethane moulding requiring two or more part assembly process. It will also be understood that by appropriate use of surface skins for the contact assembly in accordance with aspects of the present invention that surface skin can be colour matched to an existing vehicle full body colour or chromed to suit particular customer objectives.

Assembly of Impact protection arrangements in accordance with aspects of the present invention to a vehicle body is also an important requirement with respect to meeting necessary objectives concerning protection and energy absorption. In accordance with aspects of the present invention as described below, an armature and contact assembly may be hinged to a vehicle body surface such that the combination of the armature and contact assembly pivot about the hinge towards generally an upper bracket to appropriately present the impact protection arrangement about a vehicle. It will be understood that it is convenient to attempt to use a standardised impact protection arrangement upon a number of different vehicle shapes. By providing a pivot hinge to secure one side of the armature/impact assembly combination, the other side of that combination can be secured through a bracket of varying or adjustable length and configuration to accommodate variations in vehicle size and surface configuration. Furthermore, these brackets as well as the hinge can be arranged to be energy absorbing through deformation and therefore add to the mix of potential energy absorbing elements in an impact protection arrangement In accordance with aspects of the present invention.

The armature as described above utilised in an impact protection arrangement in accordance with aspects of the present invention provides the relatively stiff support mechanism for the arrangement. Typically metals and plastics materials are utilised to form these armatures but alternatively a stiff cellulose material such as cardboard may be utilised, particularly as the armature is generally embedded within the contact assembly and therefore may not be subject to degradation through weathering, etc. It will also be understood by appropriate folding and corrugation in the materials from which the armature is made that thinner metals and plastics can be provided with apertures and cut-outs to weaken the armature where necessary for additional impact protection.

The impact protection arrangement may have an integral skin f or an injection moulded cover which may be coloured or chromed. The surface skin may also be given a soft aspect by use of a sprayed polyurethane skin or rotor cast PVC coating.

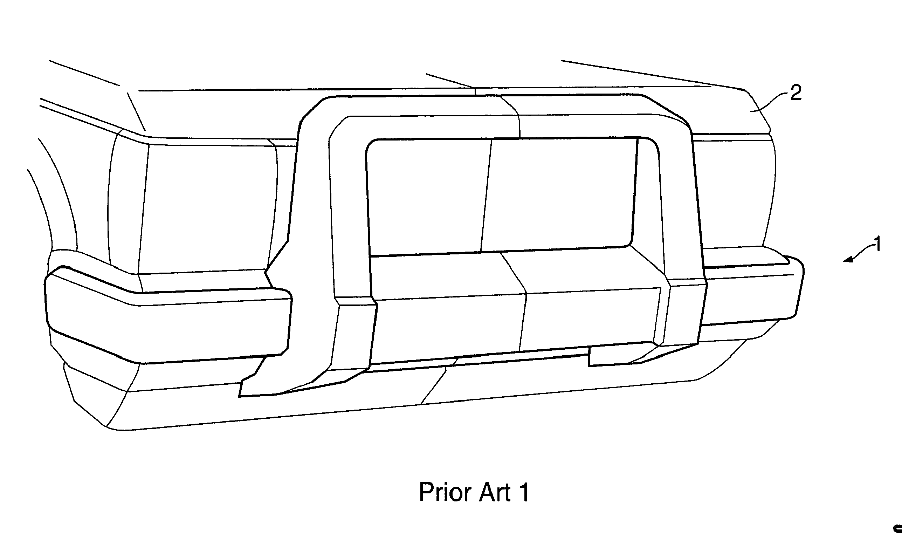

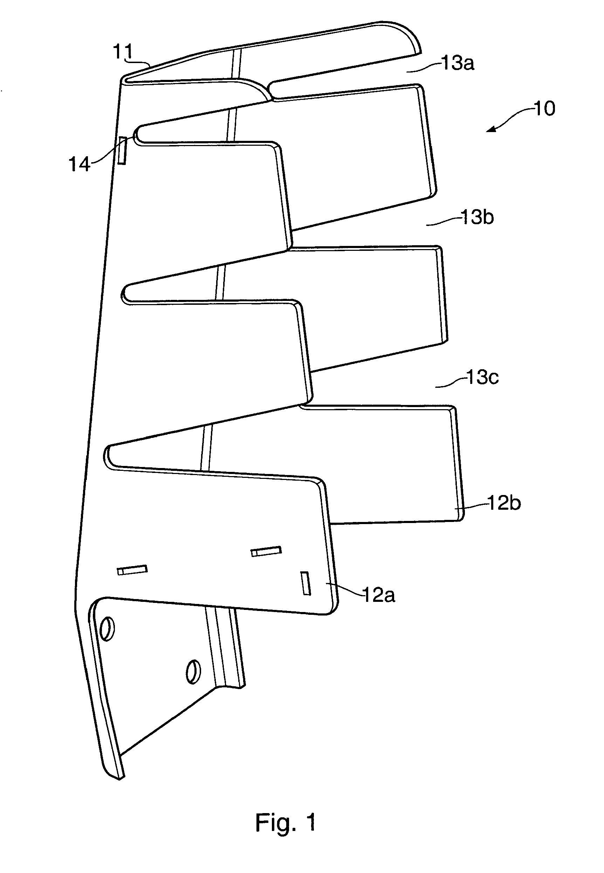

As indicated above, armatures within impact protection arrangements in accordance with aspects of the present invention generally form a frame with upstanding column parts and lateral spars extending between them. These columns and spars create a frame upon which the contact assembly comprising foams and skins along with further energy absorbing features are supported and presented upon a vehicle. Fig. 1 illustrates a column 10 in accordance with one aspect of the present invention. This column 10 has an Impact side 11 with a channel formed by arms 12 extending rearwardly or forwardly away from or towards the impact side 11. The arms 12 incorporate cut-out portions 13 of appropriate size such that under an impact load presented to the impact side 11 there will be deformation and bending of the column 10 to absorb energy.

It will be noted that the cut-outs 13 are generally of a wedge shape with a rounded front edge 14 extended rearwardly to an open gap at the distal end of the arms 12. As illustrated, normally the uppermost cut-outs 13a will be smaller than the lowermost cut-outs 13c partly due to the sizing of the column 10 as well as expected impact loading. Furthermore, as illustrated, typically the cut-outs 13 will be symmetrical about the impact side 11 for an appropriate deformation response under impact load. However, where desired, an asymmetry in the cut-outs 13 in respective arms 13a, 13b may be provided to create an askew deformation under impact load for desired energy absorption and deflection of an impact to "softer" parts of an underlying vehicle for better protection.

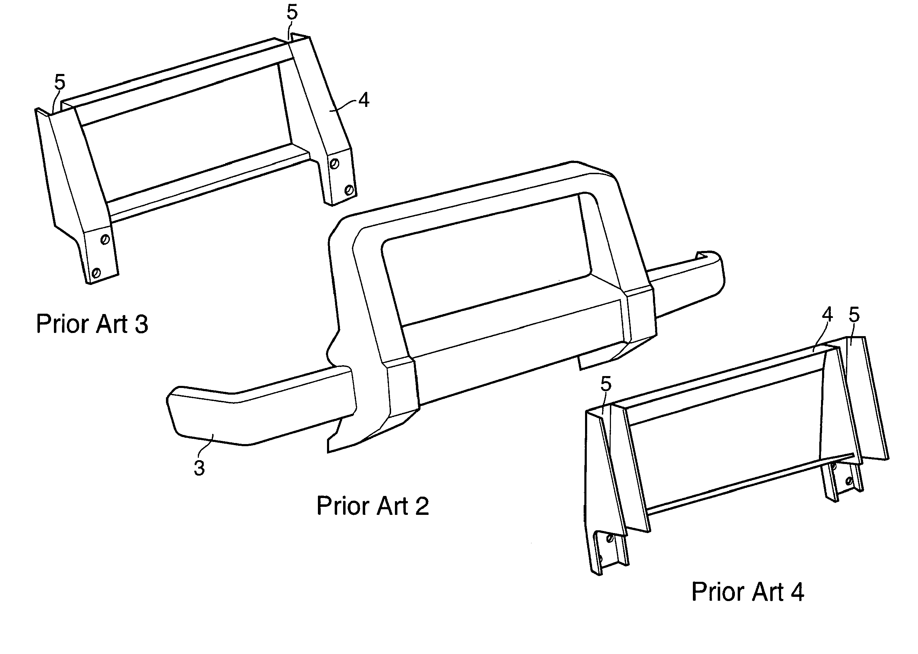

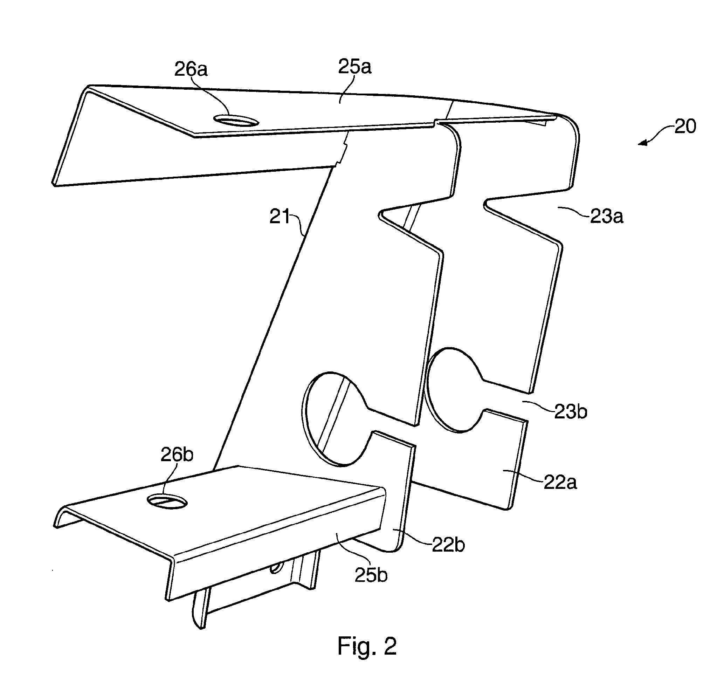

Fig. 2 provides a rear perspective view of a portion of an armature frame in accordance with aspects of the present invention. Thus, a column 20 is associated with lateral spars 25 including mounting apertures 26 to enable the armature 20 to allow accessories such as spot lamps to be secured to the impact protection arrangement. As previously, the armature 20 will be substantially made from a metal or plastics material fabricated into box-like sections to form channels for an appropriate impact response. As will be described later, the armature 20 can also be formed from a high density corrugated cardboard arranged to appropriately deform under impact load.

The column 20 as previously incorporates cut-outs 23 to provide an appropriate response by deformation when subjected to impact loads upon an impact side 21. As previously, the cut-outs 23 are provided in arms 22 defining a channel 25 extending away from the impact side 21. Alternatively, an impact load could be presented on the other side so that the arms 22 splay and to absorb energy.

An upper cut-out 23a is wedge shaped but not to the same depth as the cut-outs 13 depicted in Fig. 1, In such circumstances the weakening effect of the cut-out 23a will generally be less upon the column 20 than the cut-outs 13 upon column 10 depicted in Fig. 1. Nevertheless there will be a directionality with respect to bending under impact to absorb loads.

Cut-outs 23b take a keyhole shape and again, under impact loads, will cause flexing of the column 20 when such impact loads are presented to the impact side 21. Such bending of the column about the cut-outs 23 will absorb energy and therefore improve impact protection.

The cut-outs 13, 23 depicted in Figs. 1 and 2 create a defocused bend point for flexing of the column when an impact load is presented to the impact side 11, 21 such that, through material bending and deformation, energy is absorbed gently as a result of impact loads presented in the direction of arrowheads A, B respectively In Figs. 1 and 2. Such energy absorption will provide some protection under impact should a vehicle incorporating an impact protection arrangement in accordance with aspects of the present invention be in percussive contact with a pedestrian particularly when the armature frame is embedded in cushioning or energy absorbing material such as foams as described later.

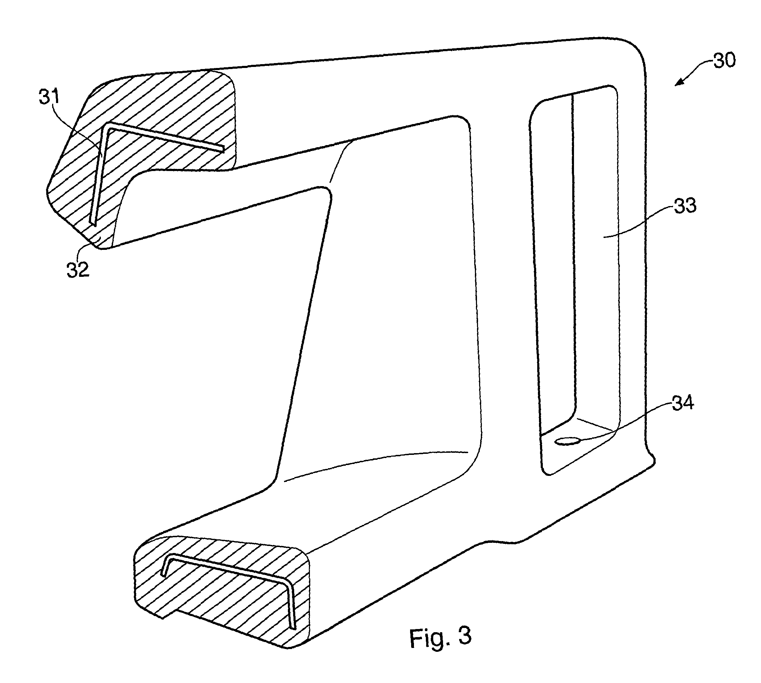

Fig. 3 provides a partial rear perspective cross-section of an impact protection arrangement 30 in accordance with aspects of the present invention. The arrangement 30 incorporates an armature 31 which as described previously will have lateral spars (partially exposed) in Fig. 3 and upstanding columns generally encased in a foam such as polyurethane foam 32 skinned with an appropriate cover material.

The armature 31 may be weakened as described previously with cut-outs and through locallsed weight reduction to assist deformation under impact loads whilst ensuring that the arrangement 30 remains sufficiently structurally robust to be operationally effective in presenting a contact assembly.

As can be seen at one end of the arrangement 30 upstanding column parts 33 have a relatively thin cross-section as a result of material thickness reductions as described above. Nevertheless through positioning of the armature 31 within the arrangement 30 it will be understood that apertures 34 and other fixing points can still be provided within the arrangement 30 to allow the arrangement to be secured to a vehicle body.

Fig. 3 provides an indication of the nature of over-moulding with foams and other energy absorbing materials provided upon an armature 31 such that the combination of the armature 31 and the contact assembly constituted in part by the over-moulded foam and surface covering can act as an appropriate impact protection arrangement 30.

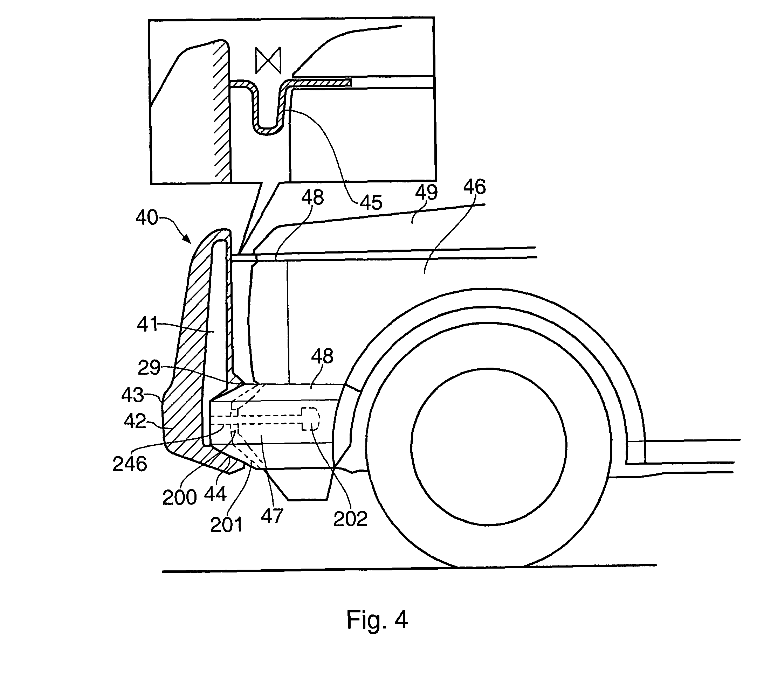

It will be understood with regard to impact protection arrangements generally a combination of an armature and a contact assembly is provided to extend over an existing part of a body structure. Although the combination of the armature and the contact assembly may be consistent with the contour of the vehicle body, generally it will be provided as an adjunct to that body. In such circumstances in terms of impact protection, the manner by which the armature and contact assembly are secured to the body can provide further means by which there is energy absorption and therefore adjustment in impact protection. Figs. 4 to 7 illustrate mounting aspects of an impact protection arrangement consistent with embodiments of the present invention.

In Fig. 4 a combination 40 comprising an armature and in particular an upstanding post or column 41 and a contact assembly comprising foam 42 and a skin 43 are secured through mountings in the form of a hinge 44 and an energy absorbing bracket 45 (illustrated in expanded form). The mounting bracket 44, 45 act to absorb energy at their appropriate locations to augment the impact energy absorption function of the armature 41 and contact assembly 42, 43, The brackets 44, 45 allow the combination 40 to be secured to a vehicle 46 at appropriate positions such as illustrated about the integral bumper 47 of the vehicle 46 and at a seam 48 between a bonnet 49 and the remainder of a vehicle 46.

As previously within the combination 30, the foam 42 as well as the armature 41 are arranged to provide a crumple zone for energy absorption under impact loads. The brackets 44, 45 as well as other potential locating brackets 29 act to absorb energy by appropriate deformation. Thus, the upper bracket 45 generally has a loop or bend shape such that under impact loads the loop is compressed to absorb energy by deformation of the material from which the bracket 45 is formed.

It will be appreciated that the armature 41 and contact assembly 42, 43 as illustrated in solid line may be attached directly to a bumper 48. However, such attachment of the armature 41 and assembly 42, 34 directly to the bumper 48 may create compounding of the mechanical resistance of these elements 41, 42, 43, 48 resulting in difficulties with respect to meeting necessary impact absorption requirements. The combination of elements 41, 42, 34 with bumper 48 will generally be stiffer. Alternatively, as also depicted in Fig. 4, the assembly 42, 34 and the armature 14 may be secured upon an independent mounting shown in broken line 246 which passes through an aperture 200 in a shortened internal bumper 201 (shown in broken line). In such circumstances, the assembly 42, 43 and armature 41 are independently presented from the integral bumper 201 of the vehicle 46 through the mounting 246 extending through the aperture 200 directly to a mounting point 202 of the vehicle. The impact absorbing effects of the assembly 42, 34 and armature 41 are therefore allowed to act without any stiffening of the integral bumper 43 of the vehicle.

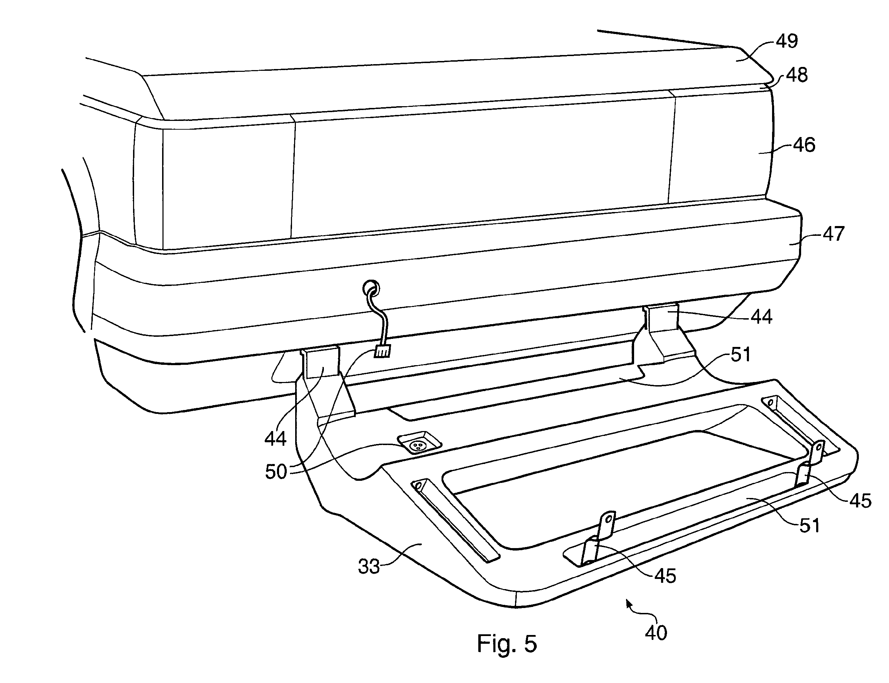

As seen In Fig. 5 a lowermost bracket 44 as indicated above may be a hlnge to allow pivoting of the combination 40 firstly into an appropriate presentational position and then possibly under impact loads. In such circumstances during assembly the mountings for the hinge brackets 44 will be provided on or about the integral bumper 47 of the vehicle 46. Once secured on the brackets 44 the combination 40 will be pivoted around these brackets 44 to an appropriate position such that the brackets 45 can engage at the seam 48 as described previously. Generally electrical couplings 50 will be provided to enable accessories within the combination to be appropriately powered. These accessories may include an airbag secured for rearward projection in a recess 51.

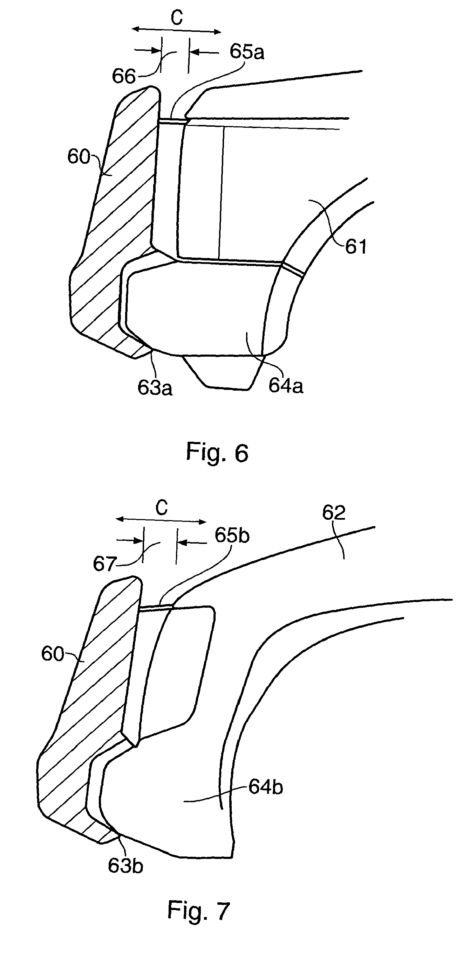

One particular advantage of providing a pivot bracket and energy absorbing upper bracket 45 as described above with regard to Figs. 4 and 5 is that the pivot nature about the hinge bracket 45 allows adjustability for different vehicle sizes and configurations. Figs. 6 and 7 illustrate in part-side cross-section a consistent impact protection arrangement structure combining a combination of an armature and a contact assembly 60 secured respectively to a first vehicle type 61 and a second vehicle type 62. It will be noted that the first vehicle type 61 has a generally upright front surface profile whilst the second vehicle type 62 has a more sloped front surface profile, Mounting brackets in the form of hinges 63 can be secured to the bumper part 64 of vehicle 61, 62. Such a hinge bracket 63 allows pivoting in the direction of arrowhead C such that an upper deformable bracket 65 can be adjustable in dimension between bracket 65a and 65b and so the distance between an appropriately presented arrangement 60 and a surface of the vehicle 62 can be set respectively at distances 66, 67. Thus, the same impact protection arrangement 60 can be generally secured to different vehicle types 61, 62.

As indicated above, generally the arrangement 60 will absorb energy for impact protection but also through the mountings 63, 65 deformation energy will be absorbed to provide impact protection.

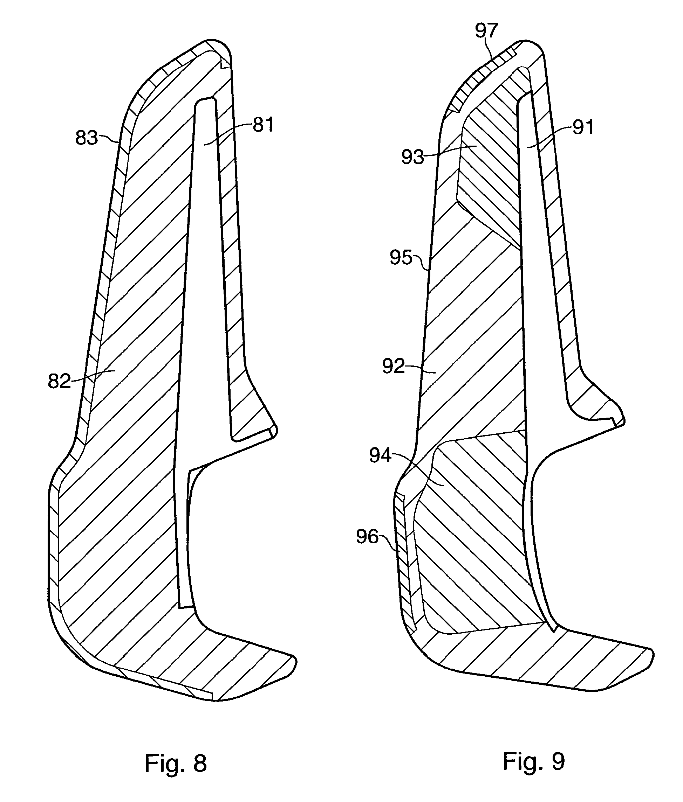

Figs. 8 to 13 provide illustrative cross-sections of armature and contact assembly combinations in accordance with exemplary embodiments of the present invention. It will be appreciated in general a relatively stiff armature is combined with cushioning and energy absorbing materials to provide impact protection. The manner of this combination will, to a large extent, be dependent upon the desired impact performance requirements, the aesthetic shaping and surface coverings necessary and an ability to mount the impact protection arrangement on a particular vehicle with the desired accessories and functions of that vehicle.

Fig. 8 illustrates an armature 81 substantially embedded within energy absorbing foam 82. This foam is shaped to provide the aesthetic appearance of the arrangement necessary for a vehicle type and is generally covered with a moulded outer layer 83 for colour co-ordination with the vehicle and protection of the foam 82. Thus, the arrangement depicted in Fig. 8 depends significantly upon the foam 82 to provide initial impact energy absorption and then appropriately translates that energy to the armature 81 which itself will also be designed through cut-outs, etc. described previously to provide energy absorption by deformation. The arrangement depicted in Fig. 8 will be relatively easy to manufacture. The foam will tend to be of an expanded polystyrene, polyurethane or similar type.

Fig. 9 illustrates an impact arrangement in accordance with aspects of the present invention in which foams and other energy absorbing segments are combined with an armature 91 to tune the impact energy absorption effectiveness of an impact protection arrangement in accordance with the present invention. Thus, an impact absorbing foam 92 substantially embeds the armature 91 with alternative impact absorbing foams 93, 94 appropriately positioned to give differing impact energy absorbing effects at different parts of the arrangement. It will also be noted that the foam is again covered with a PU skin 95 or similar material to provide environmental protection for the arrangement. For association of such accessories as parking sensors and pedestrian sensors, a soft touch cover 96 is provided to a lower part of the arrangement and similarly an upper area 97 as an alternative surface covering is provided for potentially a graphic or other feature on the arrangement. Thus, the arrangement depicted in Fig. 9 will have zones of differing impact effectiveness. Typically the segments 93, 94 will be softer than the bulk foam 92 but this will be dependent upon tuning of the arrangement to a particular body impact response profile.

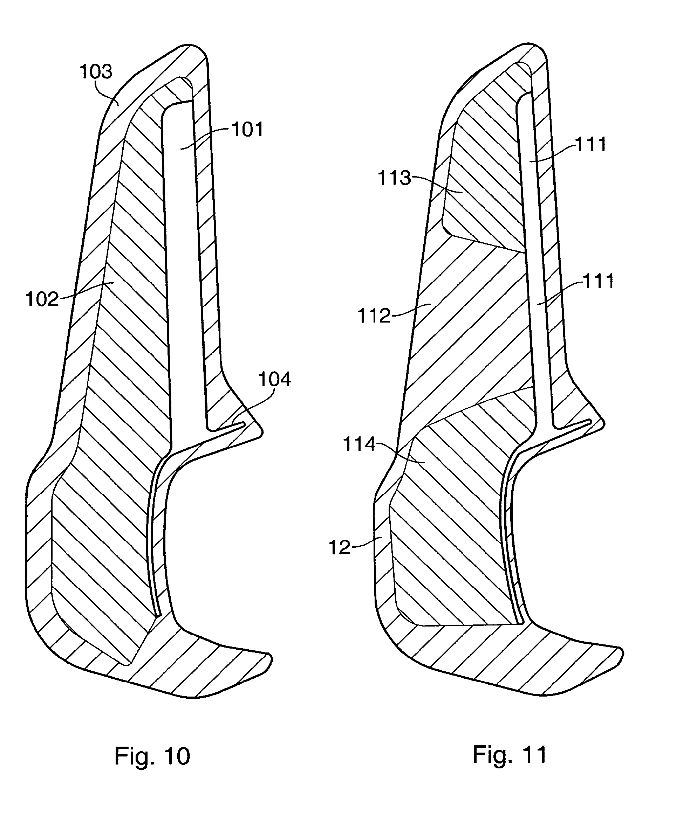

Fig. 10 illustrates an armature 101 again embedded within an inner foam 92 and an outer cover foam 93 with a skin cover. In such circumstances the outer foam 93 may have an impact resistance to denting whilst the inner foam 92 will be softer and therefore deform once the initial impact load is above a certain level.

Fig. 11 provides a further alternative arrangement in accordance with aspects of the present invention In which an armature 111 is located within a foam body comprising a foam bulk 112 and additional foam segments 113, 114 in order to tune the deformation for energy absorbing responsiveness of the arrangement. It will be noted that part of the bulk foam 112 extends in front of the segments 113, 114 to provide in use probably resistance to dent deformation whilst relatively softer segments 113, 114 will provide a tuned deformation response in use.

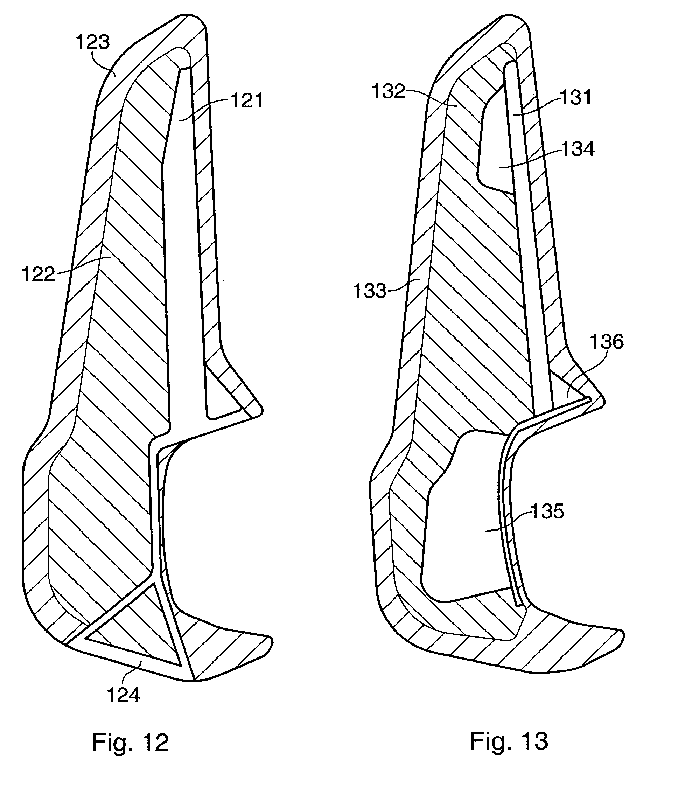

Fig. 12 illustrates an impact protection arrangement in accordance with aspects of the present invention in which an armature 121 is shaped to provide particular impact protection in association with energy absorbing foam sections 122, 123. The armature 121 incorporates an integral under-bumper guard to provide resistance to deformation in this area so that the arrangement will resist over-riding an object or pedestrian.

Fig. 13 provides a cross-sectional view of an impact protection arrangement in accordance with aspects of the present invention in which an armature 131 is again associated with foam segments 132, 133 for impact energy absorption but air pockets 134, 135 are also provided to facilitate deformation and therefore desired impact load absorption.

It will be noted that the armatures 81, 91, 101, 112, 121, 131 all are close to a rear surface of their respective arrangement to allow mounting of the arrangement to a vehicle structure such as an integral bumper within that structure. Furthermore, as illustrated In Fig. 10, a part 104 can further key the armature into the foam parts of the arrangement as well as provide a robust location for securing the arrangement to a vehicle. As illustrated In Fig. 13, this robust fixing arrangement can be further improved by including a brace segment 136.

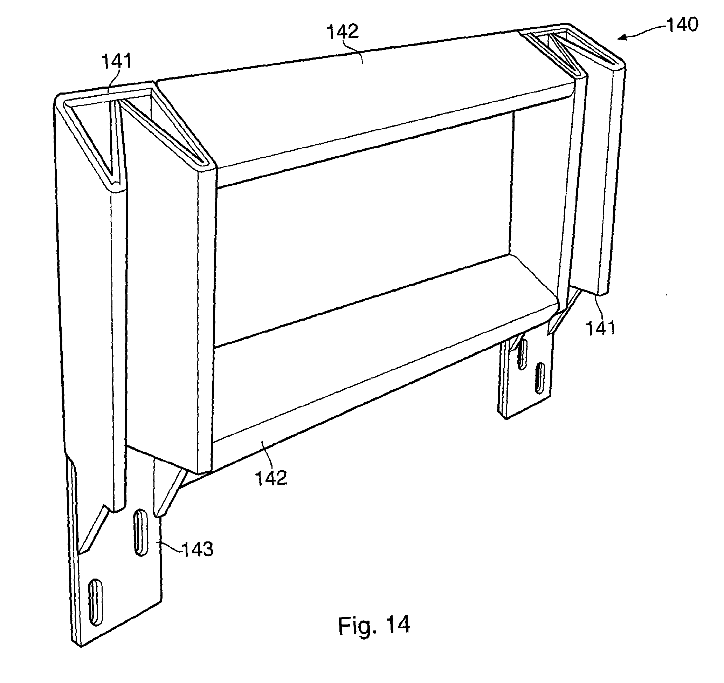

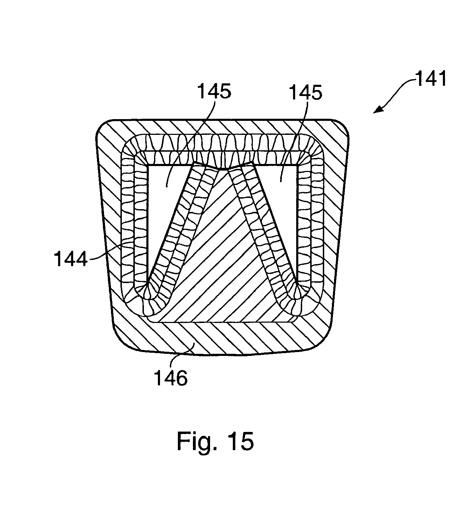

As indicated above, an armature frame comprising columns and lateral struts or sections is important with respect to providing a stiffer aspect to an impact protection arrangement in accordance with aspects of the present invention. Provision of this armature can take the form of thin sheet metal or plastics materials formed Into box sections or channels as described above in order to allow the armature to flex under compressive load. Figs. 14 and 15 illustrate a potential armature construction formed from heavy duty corrugated and possibly recycled cardboard material. The armature 140 has column sections 141 and lateral sections 142 secured upon reinforced parts 143. As can be seen, the columns 141 and lateral sections 142 comprise folded cardboard sheet material. As indicated previously, this is generally corrugated recycled cardboard, die-cut and creased to enable folding to the channelled or boxed cross-sections, as depicted in Figs. 14 and Fig. 15. It will also be understood that where necessary the fabricated parts 141, 142 may be delivered in a flat-pack form to enable folding at a use's site and subsequent encasement within foam or other force-absorbing materials. By use of cardboard, the armature 140 is relatively light and inexpensive whilst being robust and uses recycled material to achieve an integral energy absorbing structure. The reinforcing parts 143 are provided to enable the armature to be secured appropriately through mountings to a vehicle.

Fig. 15 provides a cross-section of a column part 141 in accordance with aspects of the present invention. The column part 141 comprises folded corrugated cardboard 144. This cardboard 144 as indicated previously is die-cut and creased where folds are required to enable the cardboard to adopt the folded configuration as depicted in Fig. 15. In such circumstances, air pockets 145 are provided which are of a size determined to facilitate energy absorption during deformation under impact load. The column 141 depicted in Fig. 15 is arranged such that the armature formed by the cardboard 144 is configured such that the front 146 where the impact load will be provided will act upon a cell-foam insert 147 with the whole column 141 encased in a skinned polyurethane foam to a desired aesthetic shape. In such circumstances, the column 141 will deform both in terms of the armature created by the cardboard 144 folded as illustrated and through the effects of the foam insert 147 and skinned polyurethane foam 148.

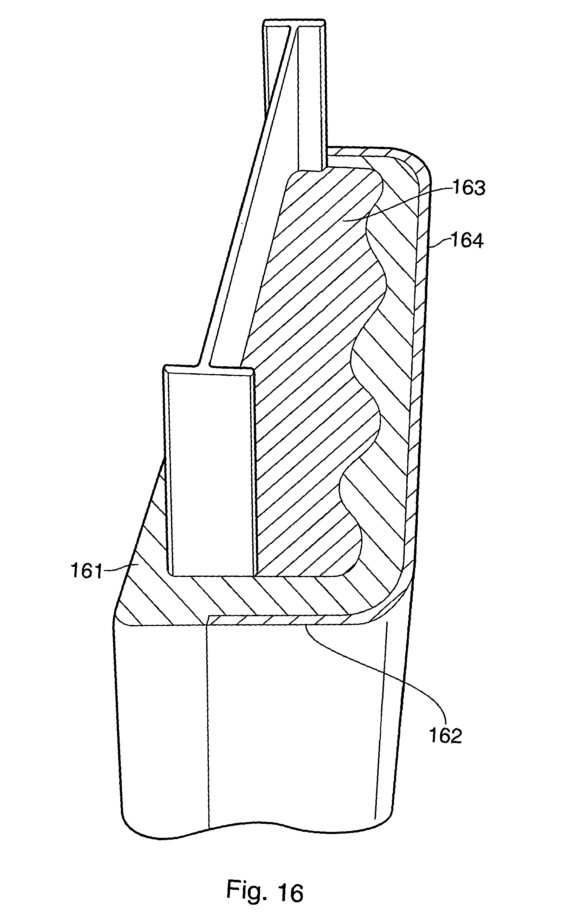

Aspects of the present invention as indicated combine an armature with a contact assembly typically in the form of a foam combination. Normally, both the armature and the contact assembly are arranged to respectively flex or buckle in order to absorb energy and so provide impact protection in an appropriate arrangement. A balance is struck between the armature and the contact assembly in association with the underlying vehicle structure to achieve a desired objective generally in terms of regulatory authority stipulations with respect to performance level. Figs. 16 to 19 illustrate top perspective part-cross-sectional views of respective impact protection arrangements in accordance with aspects of the present invention.

In Fig. 16, an armature 160 is encased within a contact assembly comprising an outer foam layer 161 and a frontal cover 162 with an operative co-operation between the outer foam layer 161 and an underlying foam insert 163 in order to provide a desired protective energy absorption flexibility in use in response to a percussive load applied at a front side 164. In accordance with aspects of the present arrangement depicted in Fig. 16 a wavy or corrugated association between the foam layers 162 and the inner insert 163 acts to achieve a desired impact load absorption. It will be noted due to the nature of the armature shaping that the insert 163 is constrained for presentation forwardly in the direction of the front side 164 so that the insert 163 is appropriately presented to achieve the desired impact load absorption. The foam layer 162 may be coloured or chromed and will generally be flexible to provide an aesthetically pleasing surface for the impact protection arrangement depicted in Fig.16.

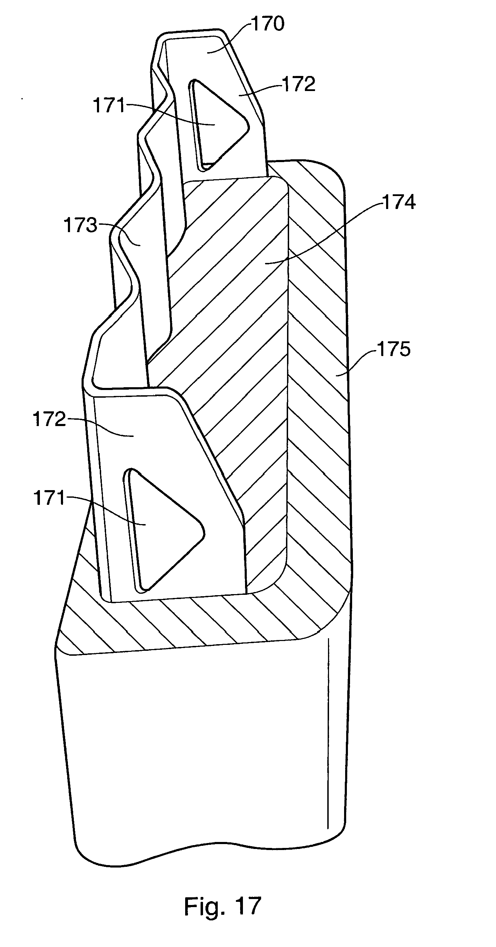

Fig. 17 illustrates an impact protection arrangement in accordance with aspects of the present invention in which an armature 170 incorporates apertures 171 in arm sections 172 as well as a wavy base section 173 for association with a foam insert 174. Insert 174 is therefore constrained by the armature 170 to present an absorption front for impact load absorption with the combination of armature 172 and insert 174 encased within an outer foam cover 175 which may provide an externally acceptable appearance for the impact protection arrangement. Generally, the insert 174 will be of a softer material than the external layer 175 so that the external layer 175 can resist denting whilst if a sufficiently aggressive impact load is presented then this layer 175 through its limited depth will buckle against the softer Insert 174 directionally presented between the arms 172 of the armature 170 for impact load absorption. If the deformation of the insert 174 and layer 175 is sufficient it will be understood that the armature 170 will itself buckle to provide further energy absorption.

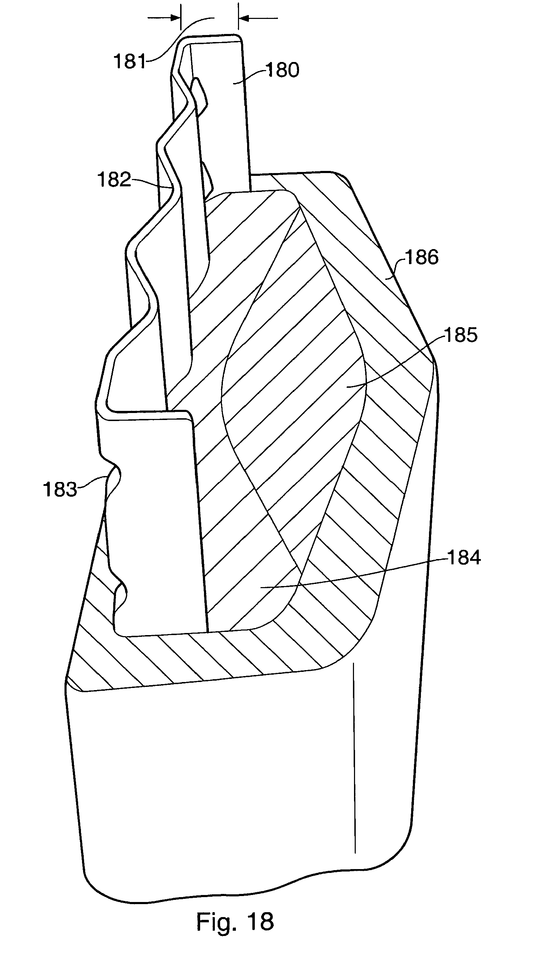

Fig. 18 illustrates an impact protection arrangement in which an armature 180 is relatively flat and has a limited depth 181 so that the armature 180 substantially provides a flat backer plate for the arrangement. This backer plate is reinforced through corrugations 182 as well as corner stiffness elements 183. In order to provide impact absorption the corrugations 182 will allow some flexing but the arrangement comprises combinations of foam or other energy absorption materials in a desired combination. Thus, the inner insert 184 is presented adjacent to the armature 180 with an intermediate insert 185 between that insert 184 and an outer layer 186. By judicious choice of the materials from which the layers 184,185, 186 are formed as well as the nature of the armature 180, its depth 181 along with the corrugations 182 in terms of their spacing and depth and stiffness provided by the corners 183 the whole assembly acts in concert to provide an energy absorption effect desired in use,

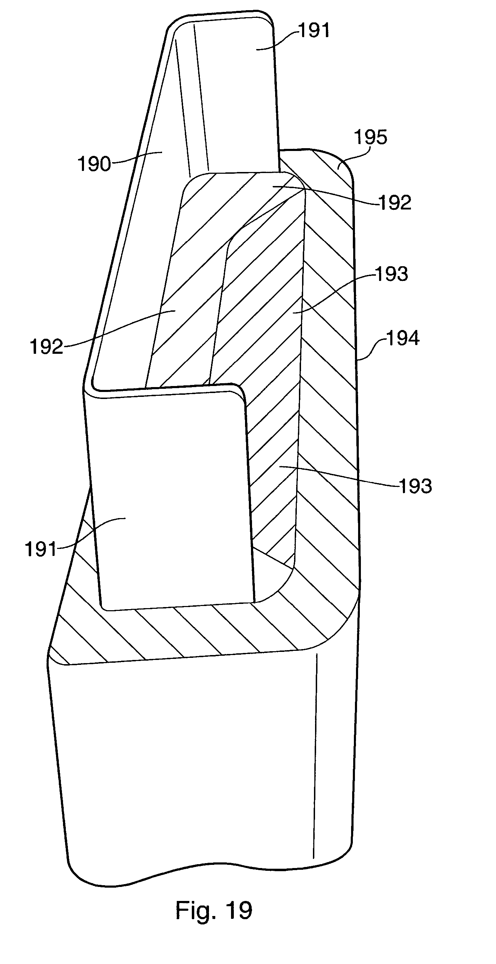

Fig. 19 illustrates a further impact protection arrangement in accordance with aspects of the present invention in which an armature 190 has a generally channelled shape with a flat back and arms 191 extending forwards to constrain inserts 192, 193 towards a front side 194 for the arrangement. The armature 190 as well as the inserts 192, 193 are encased within an outer skin layer typically of a foam polyurethane type. This outer layer 195 provides the aesthetic appearance for the impact protection arrangement. The inserts 192, 193 as indicated are forwardly presented and constrained and generally formed from energy absorbing foams of differing grades to provide the desired impact absorption effect.

As indicated above, impact protection arrangements in accordance with aspects of the present invention generally comprise an armature for presentation of a contact assembly typically in the form of foams with various inserts and variants such that a combination of the absorption provided by the foam or similar material along with deformation of the armature creates an energy absorption profile suitable for meeting the regulatory requirements for impact loading in respect of vehicles.

Impact protection arrangements in accordance with aspects of the present invention may be utilised with respect to forming nudge or bull bars associated with vehicles or surface mounted adjuncts to an existing vehicle body structure.

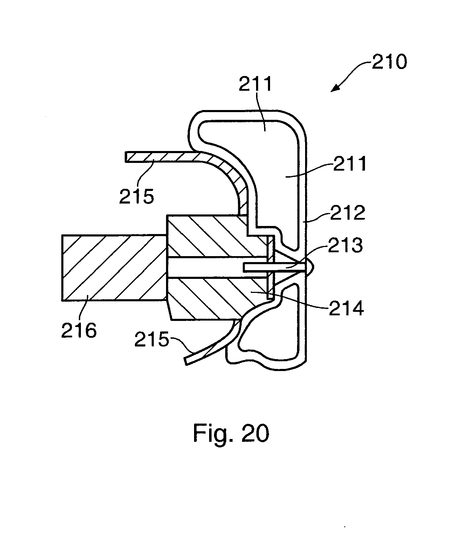

As indicated above, frontal protection systems and impact protection arrangements in accordance with the present invention may be mounted upon an internal bumper of a vehicle or at a stand-off position. Furthermore, the system or arrangement in accordance with aspects of the present invention may pass through that integral bumper to be mounted directly upon a secure location such as a lateral beam within a vehicle. Fig. 20 provides a schematic cross sectional illustration of such an arrangement 210 in which a contact assembly in the form of a foam structure 211 with a cover 212 is secured through a mounting 213 upon a secondary moulding 214 made from a more rigid foam. The assembly comprising the foam 211 with cover 212 along with moulding 214 is presented through a gap in an integral bumper 215. In such circumstances the contact assembly 211, 212, 214 acts independently against a beam 216 of a vehicle so that there is limited compounding and therefore increased stiffness of the integral bumper 2315 with the assembly 211, 212, 214 and the frontal protection system or arrangement 211 can then be tuned for appropriate impact energy absorption, It will be appreciated that the foam 211 may be relatively soft whilst the moulding 214 made from a more rigid foam or vice versa provides an appropriate energy absorption response is achieved.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An impact protection arrangement for a vehicle, the arrangement comprising an armature frame and a contact member, the armature frame arranged to present the contact member for energy absorption in association with the armature frame, the arrangement having a tuned impact energy absorption response to give differing impact energy absorbing effects at different parts of the arrangement.

2. An Impact protection arrangement according claim 1, wherein the contact member has a tuned impact energy absorption response.

3. An impact protection arrangement according to any preceding claim wherein the armature frame has a tuned impact energy absorption response.

4. An impact protection arrangement according to any preceding claim wherein the arrangement comprises an energy absorbing foam.

5. An impact protection arrangement according to any preceding claim and which includes air pockets.

6. An impact protection arrangement according to any preceding claim, there being alternative energy absorbing foams positioned to provide differing impact energy absorbing effects at different parts of the arrangement.

7. An impact protection arrangement according to any preceding claim, comprising a plurality of foams

8. An impact protection arrangement according to any preceding claim, wherein the arrangement comprises an energy absorbing foam, an armature frame and an outer cover.

9. An impact protection arrangement according to any preceding claim, there being an outer cover of foam.

10. An impact protection arrangement according to, any preceding claim, comprising an energy absorbing foam which substantially embeds the armature frame.

11. An impact protection arrangement as claimed in any preceding claim wherein the armature frame is formed from a metal and/or plastics material and/or cardboard material and/or is folded and/or corrugated to provide energy absorption

12. An impact protection arrangement as claimed in any preceding claim wherein the armature frame defines a channel extending away from or towards an impact side, the channel having at least one cut-out to facilitate deflection of the impact side upon impact.

13. An impact protection arrangement as claimed in claim 12 wherein the cut-out comprises a wedge or key-hole open to an edge and/or an aperture.

14. An impact protection arrangement as claimed in any preceding claim, wherein the armature and/or the contact member are secured through an aperture In an existing bumper directly to a vehicle.

15. An impact protection arrangement as claimed in any preceding claim, wherein the armature and/or the contact member are embodied within a combined bumper and guard frontal protection system.
